# EUROPEAN PATENT SPECIFICATION

(11) **EP 3 373 299 B1**
(45) Date of publication and mention of the grant of the patent: **04.11.2020**
(21) Application number: 16861572.2
(22) Date of filing: 03.11.2016
(51) Int. Cl.: G10H 1/10, G10L 21/003, G10H 1/00, G10H 1/36, G10L 25/87

(54) **AUDIO DATA PROCESSING METHOD AND DEVICE**
AUDIODATENVERARBEITUNGSVERFAHREN UND -VORRICHTUNG
PROCÉDÉ ET DISPOSITIF DE TRAITEMENT DE DONNÉES AUDIO

(30) Priority: 03.11.2015 CN 201510738376
(43) Date of publication of application: 12.09.2018
(73) Proprietor: Guangzhou Kugou Computer Technology Co., Ltd., Guangdong Prov., 510660 (CN)
(72) Inventor: ZHAO, Weifeng, Guangzhou Guangdong 510665 (CN); CHEN, Xueqi, Guangzhou Guangdong 510665 (CN)
(74) Representative: Cabinet Beau de Loménie
(86) International application number: PCT/CN2016/104402
(87) International publication number: WO 2017/076304

(56) References cited:
- EP-A1- 2 930 714
- CN-A- 101 261 865
- CN-A- 101 313 477
- CN-A- 103 514 874
- CN-A- 105 006 234
- JP-A- 2015 161 710
- US-A1- 2002 163 533
- US-A1- 2009 120 269
- US-A1- 2011 246 186
- US-A1- 2014 039 883

## Description

### FIELD OF THE INVENTION

The present disclosure relates to an audio data processing method and device.

### BACKGROUND OF THE INVENTION

With the development of media applications, there are more and more applications for editing audio data, no longer limited to collecting and playing of various audio data, but more focused on editing of the audio data. The collected audio data is taken as an original sound for achieving various audio data outputs.

For example, in a karaoke function which is provided for a user, most of the collected audio data is edited and added with a certain sound effect before being output for a listener to listen. During editing of this audio data, if an implementation of harmonic sound effect simulation is required, the collected audio data, i.e., the input human voice, is taken as an original sound in the corresponding implementation, and on the basis of this, other human voices are superposed on the original by a certain amount and a certain ratio, so as to obtain audio data for output.

However, the implementation of the harmonic sound effect simulation adds the harmonic sound effect to the entire original sound, that is, performs harmonization throughout the entire period, which is contrary to the harmony in a real scene, resulting in a limitation of distorted harmonic sound effect simulation.

EP2930714A1 discloses a system for singing synthesis capable of generating singing by integrating into one singing a plurality of vocals sung by a singer a plurality of times or vocals of which parts that he/she does not like are sung again. WO2007129250A1 discloses a method of aligning a song with lyrics of the song which comprises the steps of aligning each lyrics fragment of a group of similar lyrics fragments C in the lyrics of the song with an audio fragment of a group of similar audio fragments of the song and aligning each lyrics fragment of a further group of similar lyrics fragments in the lyrics of the song with an audio fragment of a further group of similar audio fragments of the song.

### SUMMARY OF THE INVENTION

On this basis, there is provided in one of embodiments of the present disclosure an audio data processing method, which can avoid entire audio data from being added with a harmonic sound effect during an entire time period, thereby improving authenticity of harmonic simulation.

In addition, there is provided in one of the embodiments an audio data processing device, which can avoid entire audio data from being added with a harmonic sound effect during an entire time period, thereby improving authenticity of harmonic simulation.

In one aspect of the invention, there is provided an audio data processing method according to Claim 1.

In another aspect of the invention, there is provided an audio data processing device according to Claim 6.

There are also provided in other aspects of the invention some audio data processing methods and audio data processing devices.

As can be known from the above mentioned aspects, for any audio data requiring harmony simulation, a lyric file corresponding to the audio data is first acquired; then the audio data is segmented according to a sentence in the lyric file for obtaining an audio data segment; and data corresponding to the end syllable in the audio data segment is extracted, so that harmonic processing is performed on the data. That is to say, during the editing of the audio data, harmonic is performed only on the data corresponding to the end syllable in the audio data, rather than on the entire audio data throughout the time period, and thus the implementation of harmony simulation is consistent with the actual harmonic performed during singing, thereby improving authenticity of harmony simulation.

### BRIEF DESCRIPTION OF THE DRAWINGS

FIG. 1 is a schematic diagram of a structure of an electronic equipment provided in an embodiment of the present invention;
FIG. 2 is a flow chart of an audio data processing method in an embodiment;
FIG. 3 is a flow chart of a method for acquiring a lyric file according to audio data to be processed in FIG. 2;
FIG. 4 is a flow chart of a method for segmenting audio data according to a sentence in the lyric file to obtain an audio data segment in FIG. 2:
FIG. 5 is a flow chart of a method for extracting data corresponding to an end syllable in the audio data segment according to a preset end syllable length in an embodiment;
FIG. 6 is a flow chart of a method for performing harmonic processing on data corresponding to the end syllable in FIG. 2;
FIG. 7 is a schematic diagram of a structure of an audio processing device in an embodiment:
FIG. 8 is a schematic diagram of a structure of a lyric acquisition module in FIG. 7;
FIG. 9 is a schematic diagram of a structure of a segmentation module in FIG. 7;
FIG. 10 is a schematic diagram of a structure of an extraction module in FIG. 7; and
FIG. 11 is a schematic diagram of a structure of an end syllable processing module in FIG. 7.

### DETAILED DESCRIPTION OF THE EMBODIMENTS

Exemplary embodiments of the present disclosure will be explained in detail in the following description. It should be understood that the present disclosure may include various changes in various embodiments without departing from the scope of the present disclosure. Moreover, the descriptions and illustrations therein are essentially used for explanation of, rather than limitation to the present disclosure.

As stated above, in various editing of the audio data, if the harmonic sound effect is required to be added to the input human voice, it has to be performed on the entire input human voice, that is, the harmonic sound effect is added to the entire input human voice. Therefore, although a desired sound effect can be added to any input audio data during the existing audio data editing, for the purpose of the harmonic sound effect, it is merely superpose some other human voices on the audio data directly and abruptly, resulting in that the entire audio data are all added with the harmonic sound effect. Although achieving a purpose of harmony, it still lacks authenticity and cannot present the harmonic sound effect in the real scene.

Hence, in order to ensure the authenticity of simulation, and present a harmonic sound effect in the real scene, an audio data processing method is provided. The audio data processing method can be implemented by a computer program. Correspondingly, an audio data processing device can be stored in an electronic equipment and can be operated in the electronic equipment, thereby further achieving the harmony of any audio data.

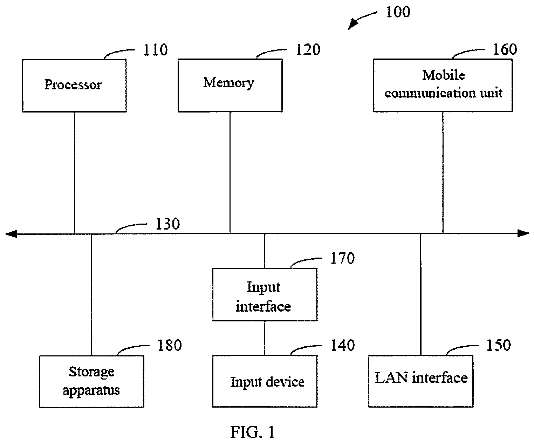

FIG. 1 shows a structure of an electronic equipment provided in an embodiment of the present disclosure. The electronic equipment 100 is merely an example adapted to the present disclosure, and cannot be considered as providing any limitation to the applicable scope of the present disclosure. The electronic equipment 100 cannot be explained as depending on or having a combination of one or more components of the illustrated exemplary electronic equipment 100.

As shown in FIG. 1, the electronic equipment 100 includes a processor 110, a memory 120, and a system bus 130. Various components including the memory 120 and the processor 110 are connected to the system bus 130. The processor 110 can be implemented by hardware for executing computer program instructions through basic arithmetic and logic operations in a computer system. The memory 120 can be implemented by a physical equipment for temporarily or permanently storing computer programs or data.

Several audio data and various lyric files can be stored in the memory 120. The processor 110 executes the program instructions stored in the memory 120.

A portable terminal equipment 100 further includes various input interfaces 170 and input devices 140, so as to implement input of various operations. The input device 140 may be at least one of a touch screen, a key, a keyboard, a mouse and the like. The portable terminal equipment 100 further includes a storage equipment 180 that may be selected from various computer readable storage media. The computer readable storage media refers to any usable media that can be accessed, including both mobile and fixed media. For instance, the computer readable media includes, but is not limited to, a flash memory (micro-SD card), a CD-ROM, a digital versatile disc (DVD), other discs, cassettes, magnetic tape storage, other storage devices, or any other media that can be used to store required information and can be accessed.

As described in detail above, the electronic equipment 100 applicable to the present disclosure will perform a specified operation that implements the harmonic sound effect. That is, the processor 110 executes the specified operation in the form of performing the program instructions stored in the memory 120, so as to implement the audio data processing in the electronic equipment 100.

In addition, the present disclosure may also be implemented through a hardware circuit or a combination of the hardware circuit and a software instruction. Therefore, the present disclosure is not limited to any specific hardware circuit, software or a combination of the hardware and software.

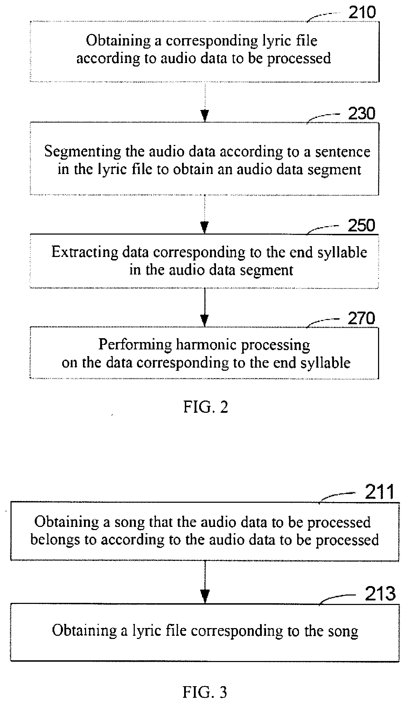

In an embodiment, specifically, the audio data processing method, as shown in FIG. 2, performs the following operations:
acquiring a corresponding lyric file according to audio data to be processed in step 210.

The audio data is an audio data that is currently edited, which may be a recorded audio data of a certain song vocally rendered by a user, or may be a prerecorded audio data of a certain song vocally rendered by a user in advance. Therefore, the editing of the audio data may be a real-time editing or a subsequent editing of the audio data.

A lyric file is acquired according to a song that the audio data belongs to, thus a harmony simulation on the audio data can be performed based on the lyric file.

The audio data processing method, as shown in Fig. 2, futher performs the following operation: segmenting the audio data according to a sentence in the lyric file to obtain an audio data segment in step 230.

The content of the lyric file includes each sentence of lyrics in a song and various time points related thereto. Therefore, the audio data can be segmented according to a sentence of the lyric file, i.e., segmenting the audio data to obtain an audio data segment corresponding to the sentence. For example, if the audio data is recorded for the whole song, the segmentation is performed according to the sentences in the lyrics file, and the audio data segment corresponding to each sentence is obtained.

If being recorded currently in real time, the audio data is segmented according to the corresponding sentence in the lyric file, so that the audio data segment is continuously segmented as the audio data is continuously input.

The audio data processing method, as shown in Fig. 2, futher performs the following operation: extracting data corresponding to an end syllable in the audio data segment in step 250.

Data is extracted according to an end syllable in the audio data segment, so as to obtain the data corresponding to the end syllable. Therefore, for several audio data segments obtained through segmentation, data corresponding to the end syllable in each audio data is obtained.

The audio data processing method, as shown in Fig. 2, futher performs the following operation: performing harmonic processing on the data corresponding to the end syllable in step 270.

Harmonic processing is only performed on the data corresponding to the end syllable in the audio data segment, so as to obtain audio data segments with harmonic sound effect simulation only performed on the end syllable, which constitute the audio data with simulative harmonic sound effect. The output audio data is added with the harmonic sound effect, and the harmonic sound effect simulation is only performed on the end syllable part of the output audio data, so as to be consistent with the harmony in a real scene, thereby ensuring the authenticity of harmony simulation. Furthermore, in the present embodiment, as shown in FIG. 3, in an embodiment, the following operations are performed in Step 210:
acquiring a song that the audio data to be processed belongs to according to the audio data to be processed in step 211 ; and
Step 213: acquiring a lyric file corresponding to the song in step 213.

The lyric file corresponding to the audio data may be in any form, but the contents thereof necessarily include several sentences, as well as start time points and end time points corresponding to each of the sentences, i.e., start time and end time of each sentence.

Furthermore, in actual operations, the content in the lyric file includes texts corresponding to the lyric and time points corresponding to the texts. Herein, texts respectively corresponding to a head and an end of each sentence are first determined, and then time points corresponding to the head and the end of the sentence are acquired. The time points respectively corresponding to the head and end of the sentence are the start time and end time of the sentence.

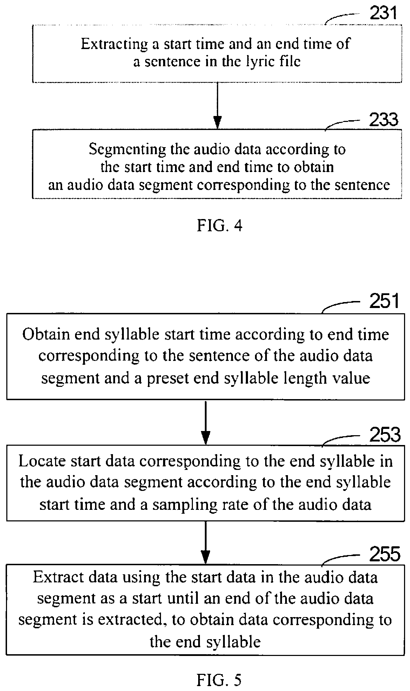

In an embodiment, as shown in FIG. 4. the following operation is performed in step 230:
extracting a start time and an end time of a sentence in the lyric file in step 231.

The start time and end time of the sentence in the lyric file are extracted, and the sentences are distinguished by time.

It should be noted that if an interval exists between the sentences in a lyric file, the interval may belong to the end of the last sentence, or belong to the head of the next sentence. Accordingly, the end time will be a time corresponding to an end of the interval, or the start time will be a time corresponding to a head of the interval.

As shown in Fig.4, the following opeartion is also performed in step 230: segmenting the audio data according to the start time and end time to obtain an audio data segment corresponding to the sentence in step 233.

The time in the audio data is consistent with the time in the lyric file. Thus, the audio data segment corresponding to the sentence can be obtained through the segmentation according to the time in the lyric file.

That is to say, in terms of the audio data recorded when a song is sung, the singing content corresponds to the lyric and time points in the lyric file. Therefore, the data, which is in a same time period as a sentence in the lyric file, is the audio data segment corresponding to the sentence.

For example, an end syllable of a sentence in the lyric lasts for 3 seconds, and 3 seconds in an audio data segment corresponding to the sentence of lyric is data corresponding to 15th to 18th seconds in the audio data segment, then the data corresponding to the 15th to 18th second in the audio data segment is data corresponding to the end syllable in the audio data segment.

Furthermore, in the present embodiment, there includes in the step 250 the operation of: extracting data corresponding to the end syllable in the audio data segment according to a preset end syllable length value.

The end syllable length value, which is preset, is a time value and represents a time length corresponding to the end syllable. Alternatively, the end syllable length value may be preset as 3 seconds.

The data corresponding to the end syllable can be determined according to the preset end syllable length value in each audio data segment, and then can be further extracted directly. That is to say, data with an end time length matching with the end syllable length value in each audio data segment is the data corresponding to the end syllable.

Furthermore, in the present embodiment, as shown in FIG. 5, the step of extracting data corresponding to the end syllable in the audio data segment according to a preset end syllable length value includes:
obtaining a start time of the end syllable according to the end time corresponding to the sentence that the audio data segment belongs to and the preset end syllable length value in step 251.

Through the audio data segmentation performed according to the start time and the end time, the segmented audio data segment corresponds to the sentence in the lyric file. Therefore, each audio data segment belongs to a sentence, so that the end time corresponding to the sentence can be obtained.

A start time of the end syllable can be obtained according to a difference between the end time and the preset end syllable length value. The start time of the end syllable will be used as a start point for extracting the data corresponding to the end syllable in the audio data segment.

As shown in FIG.5, the step of extracting data corresponding to the end syllable in the audio data segment according to a preset end syllable length value includes: locating start data corresponding to the end syllable in the audio data segment according to the start time of the end syllable and a sampling rate of the audio data in step 253.

Each data in the audio data segment has a corresponding time, that is to say, the time corresponding to the data may be determined according to a position and a sampling rate of the data in the audio data, i.e., t = n/fs, where t is the time corresponding to the data, n is the coordinate of the data in the audio data, and fs is the sampling rate of the audio data.

Therefore, a coordinate corresponding to the start time of the end syllable in the audio data can be calculated and obtained according to the start time of end syllable and the sampling rate of the audio data, so as to locate data in the audio data segment and obtain start data corresponding to the end syllable.

As shown in FIG.5, the step of extracting data corresponding to the end syllable in the audio data segment according to a preset end syllable length value includes: extracting data starting from the start data in the audio data segment until an end of the audio data segment, to obtain data corresponding to the end syllable in step 255.

In the audio data segment, the start data is directly taken as a start to sequentially extract data until the end of the audio data segment, thereby obtaining data corresponding to the end syllable, and then performing harmonic on the extracted data subsequently.

Through the above mentioned process, all the data corresponding to the end syllable are extracted from the segmented audio data segments. Further, harmonic sound effect simulation on the data is implemented in each audio data segment, thereby achieving the harmonic sound effect simulation in the entire audio data and improving authenticity of the sound effect simulation.

It should be noted that if an interval between sentences belongs to the audio data segment corresponding to the last sentence, the extracting process of the data corresponding to the end syllable is a data extracting process between the start data and an end of the interval. That is to say, for the audio data segment attached with an interval, data extraction will still performed sequentially in accordance with the start data, thereby obtaining the data corresponding to the end syllable having the interval. In the subsequent harmonic processing, harmonic processing can be directly performed on the data corresponding to the end syllable having the interval.

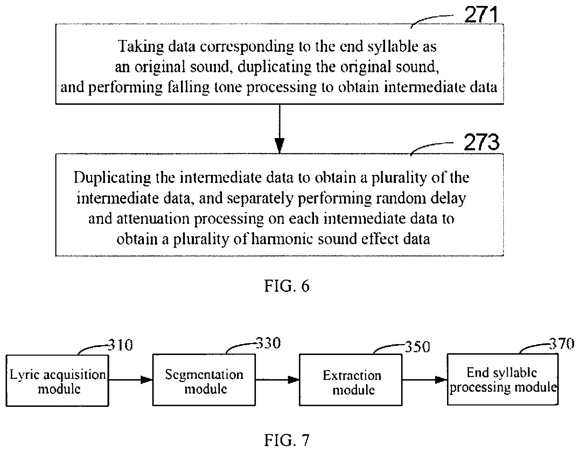

In an embodiment, as shown in FIG. 6, there includes in the step 270 the following operation:
taking data corresponding to the end syllable as an original sound, duplicating the original sound, and performing falling tone processing to obtain intermediate data in step 271.

The data corresponding to the end syllable is duplicated. Either of the data corresponding to the end syllable can be taken as an original sound, then the falling tone processing is performed on another data corresponding to the end syllable, so as to obtain intermediate data. The algorithm for implementing falling tone processing is an algorithm related to pitch shift.

As shown in FIG.6, there further includes in the step 270 the following operation: duplicating the intermediate data to obtain a plurality of the intermediate data, and separately performing random delay and attenuation processing on each intermediate data to obtain a plurality of harmonic sound effect data in step 273.

Data corresponding to the end syllable regarded as the original sound and the intermediate data are obtained through above-mentioned steps. At this moment, the intermediate data s'(n) is duplicated to make L copies, each of which is added with a random delay and a random attenuation, i.e.. s"=r^{∗}s'(n-P), where r is a pure decimal, P is a positive number, and s" is any harmonic sound effect data.

As shown in FIG.6, there further includes in the step 270 the following operation: superposing the original sound and the harmonic sound effect data to obtain audio data with simulative harmonic sound effect in step 275.

L copies of s" are superposed on the original sound to obtain the end syllable with simulative harmony in the audio data segment, thereby implementing harmony simulation in the audio data segment. A plurality of audio data segments are spliced together to obtain an audio data to be output.

If data corresponding to an end syllable having an interval is taken as the original sound, the data with harmonic sound effect is also obtained on the basis of the data corresponding to the end syllable having the interval. Therefore, in the data corresponding to the end syllable, a part corresponding to an interval is empty, and correspondingly, in the data with harmonic sound effect, a part corresponding to the interval is also empty. Therefore, in the superposition of the original sound and the data with harmonic sound effect, the parts where the data is empty will also be superposed together to obtain the end syllable that simulates the harmony and has the interval, thus the harmony simulation in the end syllable is realized, and this will not affect the intervals existing in the original audio data.

In a specific application, for the audio data processing method as described above, it is required to obtain a corresponding lyric file first, and each sentence in the lyric file has a start time s(m) and an end time d(m), where m represents the mth sentence in the lyric file. The start time s(m) and the end time d(m) are also a start point and an end point of an audio data segment corresponding to the sentence, respectively.

It is assumed that the audio data to be processed is x(n), n is an integer less than N. and the total length of the audio data is N.

The preset end syllable length value is T. T=3 seconds, and thus the start time ts(m) of the end syllable in the audio data segment is obtained, i.e., ts(m)=d(m)-T. Therefore, data s(n) corresponding to the end syllable in each audio data segment is respectively aggregated.

One copy of s(n) is made, and falling tone processing on the copied s(n) is performed to obtain intermediate data s'(n).

At this moment, L copies of the intermediate data s'(n) are made, each of which is added with a random delay and a random attenuation, i.e.. s"= r^{∗}s'(n-P), where r is a pure decimal, and P is a positive number.

L copies of s" and s(n) are superposed to obtain a simulative harmonic end syllable y(n).

Harmony simulation on the end syllable of the audio data is accurately implemented through the above mentioned processes.

By means of the audio data processing method mentioned above, the harmony simulation can be implemented on the audio data in various audio applications, for example, a karaoke application, which greatly enriches functions of the audio applications.

In an embodiment, an audio data processing device is correspondingly provided. As shown in FIG. 7, the device includes a lyric acquisition module 310, a segmentation module 330, an extraction module 350, and an end syllable processing module 370. The lyric acquisition module 310 is configured to acquire a lyric file according to audio data to be processed.

The segmentation module 330 is configured to segment the audio data according to a sentence in the lyric file to obtain an audio data segment.

The extraction module 350 is configured to extract data corresponding to an end syllable in the audio data segment.

The end syllable processing module 370 is configured to perform harmonic processing on the data corresponding to the end syllable.

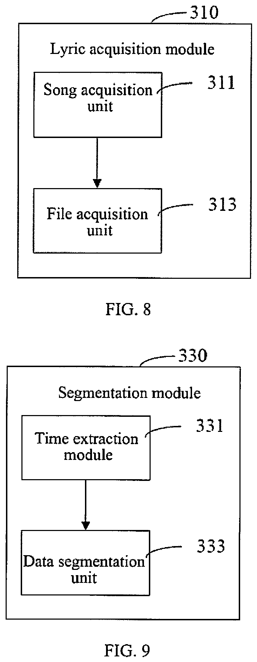

In an embodiment, as shown in FIG. 8, the lyric acquisition module 310 includes a song acquisition unit 311 and a file acquisition unit 313.

Herein, the song acquisition unit 311 is configured to acquire a song that the audio data to be processed belongs to according to the audio data to be processed.

The file acquisition unit 313 is configured to acquire a lyric file corresponding to the song that the audio data to be processed belongs to.

In an embodiment, as shown in FIG. 9, the segmentation module 330 includes a time extraction module 331 and a data segmentation unit 333.

Herein, the time extraction unit 331 is configured to extract a start time and an end time of a sentence in the lyric file.

The data segmentation unit 333 is configured to segment the audio data according to the start time and the end time, to obtain an audio data segment corresponding to the sentence.

In an embodiment, the extraction module 350 is further configured to extract data corresponding to the end syllable in the audio data segment according to a preset end syllable length value.

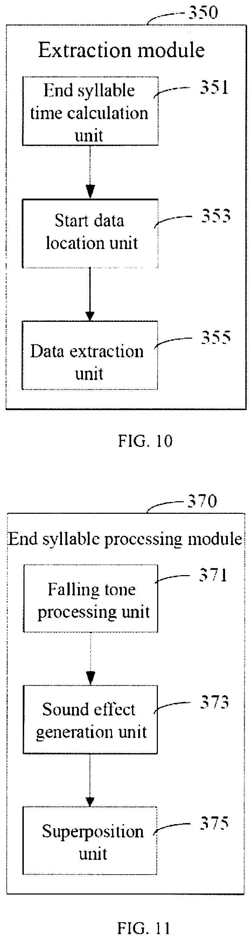

Furthermore, in the present embodiment, as shown in FIG. 10. the extraction module 350 includes an end syllable time calculation unit 351, a start data location unit 353. and a data extraction unit 355.

Herein, the end syllable time calculation unit 351 is configured to obtain a start time of the end syllable according to the end time corresponding to the sentence that the audio data segment belongs to and a preset end syllable length value.

The start data location unit 353 is configured to locate start data corresponding to the end syllable in the audio data segment according to the start time of the end syllable and a sampling rate of the audio data.

The data extraction unit 355 is configured to extract data starting from the start data until an end of the audio data segment in the audio data segment, to obtain data corresponding to the end syllable.

In an embodiment, as shown in FIG. 11, the end syllable processing module 370 includes a falling tone processing unit 371, a sound effect generation unit 373, and a superposition unit 375.

The falling tone processing unit 372 is configured to take the data corresponding to the end syllable as an original sound, duplicate the original sound, and perform falling tone processing to obtain intermediate data.

The sound effect generation unit 373 is configured to duplicate the intermediate data to obtain a plurality of the intermediate data, and separately perform random delay and attenuation processing on each intermediate data to obtain a plurality of harmonic sound effect data.

The superposition unit 375 is configured to superpose the original sound and the harmonic sound effect data to obtain audio data with simulative harmonic sound effect.

A person of ordinary skill in the art can understand that all or some of steps of the aforementioned embodiments can be achieved by hardware or by programs through instructing related hardware. The programs can be stored in a computer readable storage medium. The above-mentioned storage medium can be a read-only memory, a magnetic disk or an optical disk and so on.

Although the present disclosure is described with reference to several typical embodiments, it should be understood that the used terms are illustrative and exemplary, rather than limitative. Since the present disclosure can be specifically implemented in various forms, it should be understood that the aforementioned embodiments are not limited to any details above, and shall be explained widely within the scope of the appended claims. Hence, all variations and modifications falling within the scopes of the appended claims should be covered by the claims.

## Claims

1. An audio data processing method, comprising:
acquiring (210) a lyric file according to audio data to be processed;
segmenting (230) the audio data according to a sentence in the lyric file to obtain an audio data segment;
extracting (250) data corresponding to an end syllable in the audio data segment; the method further comprising:
performing (270) harmonic processing on the data corresponding to the end syllable, wherein the step of performing (270) harmonic processing on the data corresponding to the end syllable being **characterised by**
taking (271) data corresponding to the end syllable as an original sound, duplicating the original sound, and performing falling tone processing to obtain intermediate audio data, wherein the falling tone processing is related to a lowering pitch shift,
duplicating (273) the intermediate audio data and obtaining a plurality of the intermediate audio data, and performing random delay and attenuation processing on each intermediate audio data to obtain a plurality of harmonic sound effect data, and
superposing the original sound and the harmonic sound effect data to obtain audio data with simulative harmonic sound effect.

2. The method according to claim 1, wherein the step of acquiring (210) the lyric file according to the audio data to be processed comprises:
acquiring (211) a song that the audio data to be processed belongs to according to the audio data to be processed; and
acquiring (213) a lyric file corresponding to the song.

3. The method according to claim 1, wherein the step of segmenting (230) the audio data according to the sentence in the lyric file to obtain the audio data segment comprises:
extracting (231) a start time and an end time of a sentence in the lyric file; and
segmenting (233) the audio data according to the start time and the end time to obtain an audio data segment corresponding to the sentence.

4. The method according to claim 3, wherein the step of extracting (250) data corresponding to an end syllable in the audio data segment comprises:
extracting data corresponding to the end syllable in the audio data segment according to a preset end syllable length value.

5. The method according to claim 4, wherein the step of extracting data corresponding to the end syllable in the audio data segment according to the preset end syllable length value comprises:
obtaining (251) a start time of the end syllable according to the end time corresponding to the sentence of the audio data segment and the preset end syllable length value;
locating (253) start data corresponding to the end syllable in the audio data segment according to the start time of the end syllable and a sampling rate of the audio data; and
extracting (255) data starting from the start data in the audio data segment until an end of the audio data segment, to obtain data corresponding to the end syllable.

6. An audio data processing device, comprising:
a lyric acquisition module (310), configured to acquire a lyric file according to audio data to be processed;
a segmentation module (330), configured to segment the audio data according to a sentence in the lyric file to obtain an audio data segment;
an extraction module (350), configured to extract data corresponding to an end syllable in the audio data segment; the device further comprising:
an end syllable processing module (370), configured to perform harmonic processing on the data corresponding to the end syllable, wherein the end syllable processing module (370) is **characterised by**:
a falling tone processing unit (371), configured to taking the data corresponding to the end syllable as an original sound, duplicate the original sound, and perform falling tone processing to obtain intermediate audio data, wherein the falling tone processing is related to a lowering pitch shift,
a sound effect generation unit (373), configured to duplicate the intermediate audio data to obtain a plurality of the intermediate audio data, and separately perform random delay and attenuation processing on each intermediate audio data to obtain a plurality of harmonic sound effect data, and
a superposition unit (375), configured to superpose the original sound and the harmonic sound effect data to obtain audio data with simulative harmonic sound effect.

7. The device according to claim 6, wherein the lyric obtaining module (310) comprises:
a song acquisition unit (311), configured to acquire a song that the audio data to be processed belongs to according to the audio data to be processed; and
a file acquisition unit (313), configured to acquire the lyric file corresponding to the song that the audio data to be processed belongs to.

8. The device according to claim 6, wherein the segmentation module (330) comprises:
a time extraction unit (331), configured to extract a start time and an end time of a sentence in the lyric file; and
a data segmentation unit (333), configured to segment the audio data according to the start time and the end time to obtain an audio data segment corresponding to the sentence.

9. The device according to claim 8, wherein the extraction module (350) is further configured to extract data corresponding to the end syllable in the audio data segment according to a preset end syllable length value.

10. The device according to claim 9, wherein the extraction module (350) comprises:
an end syllable time calculation unit (351), configured to obtain a start time of the end syllable according to the end time corresponding to the sentence that the audio data segment belongs to and the preset end syllable length value;
a start data location unit (353), configured to locate start data corresponding to the end syllable in the audio data segment according to the start time of the end syllable and a sampling rate of the audio data; and
a data extraction unit (355), configured to extract data starting from the start data until an end of the audio data segment, to obtain the data corresponding to the end syllable.

## Patentansprüche

1. Audiodaten-Verarbeitungsverfahren, umfassend:
Erlangen (210) einer Liedtextdatei gemäß zu verarbeitenden Audiodaten,
Segmentieren (230) der Audiodaten gemäß einem Satz in der Liedtextdatei, um ein Audiodatensegment zu erhalten,
Extrahieren (250) von Daten, die einer Endsilbe in dem Audiodatensegment entsprechen, wobei das Verfahren ferner umfasst:
Durchführen (270) einer harmonischen Verarbeitung an den Daten, die der Endsilbe entsprechen, wobei der Schritt des Durchführens (270) einer harmonischen Verarbeitung an den Daten, die der Endsilbe entsprechen, **gekennzeichnet ist durch**:
Nehmen (271) von Daten, die der Endsilbe entsprechen, als Originalklang, Duplizieren des Originalklangs und Durchführen einer Verarbeitung für abfallenden Klang, um Zwischenaudiodaten zu erhalten, wobei sich die Verarbeitung für abfallenden Klang auf eine Verschiebung mit abnehmender Klanghöhe bezieht,
Duplizieren (273) der Zwischenaudiodaten und Erhalten einer Vielzahl der Zwischenaudiodaten und Durchführen einer zufälligen Verzögerungs- und Dämpfungsverarbeitung an allen Zwischenaudiodaten, um eine Vielzahl von harmonischen Klangeffektdaten zu erhalten, und
Überlagern des Originalklangs und der harmonischen Klangeffektdaten, um Audiodaten mit simulativem harmonischem Klangeffekt zu erhalten.

2. Verfahren nach Anspruch 1, wobei der Schritt des Erlangens (210) der Liedtextdatei gemäß den zu verarbeitenden Audiodaten umfasst:
Erlangen (211) eines Liedes, zu dem die zu verarbeitenden Audiodaten gemäß den zu verarbeitenden Audiodaten gehören, und
Erlangen (213) einer dem Lied entsprechenden Liedtextdatei.

3. Verfahren nach Anspruch 1, wobei der Schritt des Segmentierens (230) der Audiodaten gemäß dem Satz in der Liedtextdatei zum Erhalten des Audiodatensegments umfasst:
Extrahieren (231) einer Anfangs- und einer Endzeit eines Satzes in der Liedtextdatei und
Segmentieren (233) der Audiodaten gemäß der Anfangszeit und Endzeit, um ein dem Satz entsprechendes Audiodatensegment zu erhalten.

4. Verfahren nach Anspruch 3, wobei der Schritt des Extrahierens (250) von Daten, die einer Endsilbe in dem Audiodatensegment entsprechen, umfasst:
Extrahieren von Daten, die der Endsilbe im Audiodatensegment entsprechen, gemäß einem voreingestellten Endsilbenlängenwert.

5. Verfahren nach Anspruch 4, wobei der Schritt des Extrahierens von Daten, die der Endsilbe in dem Audiodatensegment entsprechen, gemäß dem voreingestellten Endsilbenlängenwert umfasst:
Erhalten (251) einer Anfangszeit der Endsilbe gemäß der Endzeit, die dem Satz des Audiodatensegments entspricht, und dem voreingestellten Endsilbenlängenwert,
Lokalisieren (253) von Anfangsdaten, die der Endsilbe in dem Audiodatensegment entsprechen, gemäß der Anfangszeit der Endsilbe und einer Abtastrate der Audiodaten und
Extrahieren (255) von Daten ab den Anfangsdaten in dem Audiodatensegment bis zum Ende des Audiodatensegments, um Daten zu erhalten, die der Endsilbe entsprechen.

6. Audiodatenverarbeitungsgerät, umfassend:
ein Liedtexterlangungsmodul (310), das dazu konfiguriert ist, eine Liedtextdatei entsprechend zu verarbeitender Audiodaten zu erlangen,
ein Segmentierungsmodul (330), das dazu konfiguriert ist, die Audiodaten gemäß einem Satz in der Liedtextdatei zu segmentierten, um ein Audiodatensegment zu erhalten,
ein Extraktionsmodul (350), das dazu konfiguriert ist, Daten zu extrahieren, die einer Endsilbe in dem Audiodatensegment entsprechen, wobei die Vorrichtung ferner umfasst:
ein Endsilbenverarbeitungsmodul (370), das dazu konfiguriert ist, eine harmonische Verarbeitung an den Daten durchzuführen, die der Endsilbe entsprechen, wobei das Endsilbenverarbeitungsmodul (370) **gekennzeichnet ist durch**:
eine Verarbeitungseinheit (371) für abfallenden Klang, die dazu konfiguriert ist, die Daten, die der Endsilbe entsprechen, als einen Originalklang zu nehmen, den Originalklang zu duplizieren und eine Verarbeitung für abfallenden Klang durchzuführen, um Zwischenaudiodaten zu erhalten, wobei sich die Verarbeitung für abfallenden Klang auf eine Verschiebung mit abnehmender Klanghöhe bezieht,
eine Klangeffekt-Erzeugungseinheit (373), die dazu konfiguriert ist, die Zwischenaudiodaten zu duplizieren, um eine Vielzahl der Zwischenaudiodaten zu erhalten, und separat eine Zufallsverzögerungs- und Dämpfungsverarbeitung an allen Zwischenaudiodaten durchführt, um eine Vielzahl von harmonischen Klangeffektdaten zu erhalten, und
eine Überlagerungseinheit (375), die dazu konfiguriert ist, den Originalton und die harmonischen Klangeffektdaten zu überlagern, um Audiodaten mit simulativem harmonischem Klangeffekt zu erhalten.

7. Gerät nach Anspruch 6, wobei das Liedtexterlangungsmodul (310) umfasst:
eine Liederlangungseinheit (311), die dazu konfiguriert ist, ein Lied zu erlangen, zu dem die zu verarbeitenden Audiodaten gemäß den zu verarbeitenden Audiodaten gehören, und
eine Dateierlangungseinheit (313), die dazu konfiguriert ist, die Liedtextdatei zu erlangen, die dem Lied entspricht, zu dem die zu verarbeitenden Audiodaten gehören.

8. Gerät nach Anspruch 6, wobei das Segmentierungsmodul (330) umfasst:
eine Zeitextraktionseinheit (331), die dazu konfiguriert ist, eine Anfangszeit und eine Endzeit eines Satzes in der Liedtextdatei zu extrahieren, und
eine Datensegmentierungseinheit (333), die dazu konfiguriert ist, die Audiodaten gemäß der Anfangszeit und der Endzeit zu segmentieren, um ein dem Satz entsprechendes Audiodatensegment zu erhalten.

9. Gerät nach Anspruch 8, wobei das Extraktionsmodul (350) ferner dazu konfiguriert ist, Daten, die der Endsilbe in dem Audiodatensegment entsprechen, gemäß einem voreingestellten Endsilbenlängenwert zu extrahieren.

10. Gerät nach Anspruch 9, wobei das Extraktionsmodul (350) umfasst:
eine Endsilbenzeit-Berechnungseinheit (351), die dazu konfiguriert ist, eine Anfangszeit der Endsilbe gemäß der Endzeit, die dem Satz entspricht, zu dem das Audiodatensegment gehört, und dem voreingestellten Endsilbenlängenwert zu erhalten,
eine Anfangsdaten-Lokalisierungseinheit (353), die dazu konfiguriert ist, Anfangsdaten, die der Endsilbe in dem Audiodatensegment entsprechen, gemäß der Anfangszeit der Endsilbe und einer Abtastrate der Audiodaten zu lokalisieren, und
eine Datenextraktionseinheit (355), die dazu konfiguriert ist, Daten ab den Anfangsdaten bis zu einem Ende des Audiodatensegments zu extrahieren, um die der Endsilbe entsprechenden Daten zu erhalten.

## Revendications

1. Procédé de traitement de données audio, comprenant :
l'acquisition (210) d'un fichier de paroles selon des données audio à traiter ;
la segmentation (230) des données audio selon une phrase dans le fichier de paroles afin d'obtenir un segment de données audio ;
l'extraction (250) de données correspondant à une syllabe de fin dans le segment de données audio ;
le procédé comprenant en outre :
la réalisation (270) d'un traitement harmonique sur les données correspondant à la syllabe de fin, dans lequel l'étape de réalisation (270) d'un traitement harmonique sur les données correspondant à la syllabe de fin est **caractérisée en ce qu'**elle :
prend (271) des données correspondant à la syllabe de fin comme son original, duplique le son original, et réalise un traitement de ton descendant afin d'obtenir des données audio intermédiaires, dans lequel le traitement de ton descendant est lié à un changement de tonalité d'abaissement,
duplique (273) les données audio intermédiaires et obtient une pluralité des données audio intermédiaires, et réalise un traitement de retard et d'atténuation aléatoire sur chaque donnée audio intermédiaire afin d'obtenir une pluralité de données d'effets sonores harmoniques, et
superpose le son original et les données d'effets sonores harmoniques afin d'obtenir des données audio avec un effet sonore harmonique simulé.

2. Procédé selon la revendication 1, dans lequel l'étape d'acquisition (210) du fichier de paroles selon les données audio à traiter comprend :
l'acquisition (211) d'une chanson à laquelle appartiennent les données audio selon les données audio à traiter ; et
l'acquisition (213) d'un fichier de paroles correspondant à la chanson.

3. Procédé selon la revendication 1, dans lequel l'étape de segmentation (230) des données audio selon la phrase dans le fichier de paroles afin d'obtenir le segment de données audio comprend :
l'extraction (231) d'une heure de début et d'une heure de fin d'une phrase dans le fichier de paroles ; et
la segmentation (233) des données audio selon l'heure de début et l'heure de fin afin d'obtenir un segment de données audio correspondant à la phrase.

4. Procédé selon la revendication 3, dans lequel l'étape d'extraction (250) de données correspondant à une syllabe de fin dans le segment de données audio comprend :
l'extraction de données correspondant à la syllabe de fin dans le segment de données audio selon une valeur de longueur de syllabe de fin prédéfinie.

5. Procédé selon la revendication 4, dans lequel l'étape d'extraction de données correspondant à la syllabe de fin dans le segment de données audio selon la valeur de longueur de syllabe de fin prédéfinie comprend :
l'obtention (251) d'une heure de début de la syllabe de fin selon l'heure de fin correspondant à la phrase du segment de données audio et la valeur de longueur de syllabe de fin prédéfinie ;
la localisation (253) de données de début correspondant à la syllabe de fin dans le segment de données audio selon l'heure de début de la syllabe de fin et une fréquence d'échantillonnage des données audio ; et
l'extraction (255) de données en partant des données de début dans le segment de données audio jusqu'à une fin du segment de données audio, afin d'obtenir des données correspondant à la syllabe de fin.

6. Dispositif de traitement de données audio, comprenant :
un module d'acquisition de paroles (310), configuré pour acquérir un fichier de paroles selon des données audio à traiter ;
un module de segmentation (330), configuré pour segmenter les données audio selon une phrase dans le fichier de paroles afin d'obtenir un segment de données audio ;
un module d'extraction (350), configuré pour extraire des données correspondant à une syllabe de fin dans le segment de données audio ; le dispositif comprenant en outre :
un module de traitement de syllabe de fin (370), configuré pour réaliser un traitement harmonique sur les données correspondant à la syllabe de fin, dans lequel le module de traitement de syllabe de fin (370) est **caractérisé par** :
une unité de traitement de ton descendant (371), configurée pour prendre les données correspondant à la syllabe de fin comme son original, dupliquer le son original, et réaliser un traitement de ton descendant afin d'obtenir des données audio intermédiaires, dans lequel le traitement de ton descendant est lié à un changement de tonalité d'abaissement,
une unité de génération d'effets sonores (373), configurée pour dupliquer les données audio intermédiaires afin d'obtenir une pluralité des données audio intermédiaires, et réaliser séparément un traitement de retard et d'atténuation aléatoire sur chaque données audio intermédiaires afin d'obtenir une pluralité de données d'effets sonores harmoniques, et
une unité de superposition (375), configurée pour superposer le son original et les données d'effets sonores harmoniques afin d'obtenir des données audio avec un effet sonore harmonique simulé.

7. Dispositif selon la revendication 6, dans lequel le module d'obtention des paroles (310) comprend :
une unité d'acquisition de chansons (311), configurée pour acquérir une chanson à laquelle appartiennent les données audio à traiter selon les données audio à traiter ; et
une unité d'acquisition de fichiers (313), configurée pour acquérir le fichier de paroles correspondant à la chanson à laquelle appartiennent les données audio à traiter.

8. Dispositif selon la revendication 6, dans lequel le module de segmentation (330) comprend :
une unité d'extraction d'heure (331), configurée pour extraire une heure de début et une heure de fin d'une phrase dans le fichier de paroles ; et
une unité de segmentation des données (333), configurée pour segmenter les données audio selon l'heure de début et l'heure de fin afin d'obtenir un segment de données audio correspondant à la phrase.

9. Dispositif selon la revendication 8, dans lequel le module d'extraction (350) est en outre configuré pour extraire des données correspondant à la syllabe de fin dans le segment de données audio selon une valeur de longueur de syllabe de fin prédéfinie.

10. Dispositif selon la revendication 9, dans lequel le module d'extraction (350) comprend :
une unité de calcul d'heure de syllabe de fin (351), configurée pour obtenir une heure de début de la syllabe de fin selon l'heure de fin correspondant à la phrase à laquelle appartient le segment de données audio et la valeur de longueur de syllabe de fin prédéfinie ;
une unité de localisation des données (353), configurée pour localiser des données de début correspondant à la syllabe de fin dans le segment de données audio selon l'heure de début de la syllabe de fin et une fréquence d'échantillonnage des données audio ; et
une unité d'extraction des données (355), configurée pour extraire des données en partant des données de début jusqu'à une fin du segment de données audio, afin d'obtenir les données correspondant à la syllabe de fin.
